(19) Europäisches Patentamt
European Patent Office
Office européen des brevets

(11) **EP 4 660 875 A1**

(12) **EUROPEAN PATENT APPLICATION**

(43) Date of publication:
**10.12.2025 Bulletin 2025/50**

(21) Application number: **24180452.5**

(22) Date of filing: **06.06.2024**

(51) International Patent Classification (IPC):
**G06N 3/0442** (2023.01)  **G06N 3/09** (2023.01)
**G06N 3/048** (2023.01)

(52) Cooperative Patent Classification (CPC):
**G06N 3/0442; G06N 3/09;** G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **NXAI GmbH**
**4020 Linz (AT)**

(72) Inventor: **The designation of the inventor has not
yet been filed**

(74) Representative: **Best, Bastian**
**Bestpatent**
**Konrad-Zuse-Platz 8**
**81829 München (DE)**

(54) **COMPUTER VISION WITH EXTENDED LONG SHORT-TERM MEMORY NEURAL NETWORKS**

(57)    Disclosed is a method (200) of performing computer vision on a data processing apparatus (1302), comprising: receiving (202) an input image (104); processing (204) the input image (104) to generate a plurality of patch tokens (106); and processing (206) the plurality of patch tokens (106) by an autoregressive neural network.

Fig. 1

**Description**

**TECHNICAL FIELD**

The invention generally relates to a neural network system architecture and process for image processing and computer vision.

**BACKGROUND**

Language modeling architectures, such as Transformers and more recently State Space Models such as Mamba, have been applied to the domain of image processing and computer vision to make use of their powerful modeling capabilities. However, in natural language processing, an input sentence is typically encoded into tokens that represent words or common subwords via a discrete vocabulary. To apply language modeling techniques to image processing, it is necessary to encode the images to be processed into a set of tokens.

Vision Transformer, also referred to as ViT (see Dosovitskiy, A., Beyer, L., Kolesnikov, A., Weissenborn, D., Zhai, X., Unterthiner, T., Dehghani, M., Minderer, M., Heigold, G., Gelly, S., Uszkoreit, J., and Houlsby, N. An image is worth 16x16 words: Transformers for image recognition at scale. In 9th International Conference on Learning Representations, ICLR 2021, Virtual Event, Austria, May 3-7, 2021. OpenReview.net, 2021.), proposes to group an input image into non-overlapping patches (of, e.g., 16x16 pixels), linearly project them into a sequence of so-called patch tokens and add positional information to these tokens. This sequence can then be processed by language modeling architectures.

Vision Mamba, also referred to as Vim (see Zhu, L., Liao, B., Zhang, Q., Wang, X., Liu, W., andWang, X. Vision mamba: Efficient visual representation learning with bidirectional state space model. CoRR, abs/2401.09417, 2024.), proposes to adapt the Mamba deep learning model to computer vision tasks.

The Extended Long Short-Term Memory (xLSTM) family was recently introduced as a new architecture for language modeling. It demonstrates the resurgence of LSTM in the LLM era, performing favorably against the likes of Transformers and State Space Models. Details about LSTM can be found in Hochreiter, Sepp & Schmidhuber, Jürgen. (1997). Long Short-term Memory. Neural computation. 9. 1735-80. Details about xLSTM can be found in Beck, M., Pöppel, K., Spanring, M., Auer, A., Prudnikova, O., Kopp, M., Klambauer, G., Brandstetter, J., and Hochreiter, S. xLSTM: Extended Long Short-Term memory, 2024. arXiv:2405.04517 as well as in European patent application no. 24155883.2 titled "EXTENDED LONG SHORT-TERM MEMORY NEURAL NETWORKS" and European patent application no. 24174530.6 titled "EXTENDED LONG SHORT-TERM MEMORY NEURAL NETWORKS".

In view of the above, it is an objective of the present invention to provide an improved neural network system architecture and process for image processing and computer vision which overcomes the above-mentioned disadvantages of the prior art at least in part.

**SUMMARY OF THE INVENTION**

The invention is defined in the independent claims. Advantageous modifications of embodiments of the invention are defined in the dependent claims as well as in the description and the drawings.

According to one aspect of the present invention, a method is provided, in particular a method of performing computer vision on a data processing apparatus. The method may be computer-implemented. The method may comprise receiving an input image, in particular a digital input image. The method may comprise processing the input image to generate a plurality of patch tokens, preferably a sequence of patch tokens. For example, the method may split the input image into patches to generate the plurality or sequence of patch tokens. The method may comprise processing the plurality or sequence of patch tokens by an autoregressive neural network. The autoregressive neural network may be an autoregressive language model.

This way, a novel generic computer vision backbone is provided that uses an autoregressive neural network as its core component. The autoregressive neural network may comprise one or more, preferably a plurality of, autoregressive neural network blocks. In one configuration, the autoregressive neural network blocks are xLSTM blocks, in which case a generic computer vision backbone that uses xLSTM blocks as its core components is provided.

The autoregressive neural network may be implemented on a data processing apparatus. The data processing apparatus may comprise a memory. The memory may be stored on a storage medium. The autoregressive neural network may be implemented by instructions stored on the storage medium of the data processing apparatus that, when executed, implement the autoregressive neural network. The autoregressive neural network may be provided as an electronic data structure. The autoregressive neural network may be configured to be stored on a storage medium of a data processing apparatus and/or configured to be processed by one or more processors of a data processing apparatus. Such a data processing apparatus may comprise one or more computers.

The autoregressive neural network may comprise a (at least one) memory cell. The memory cell may be configured to store data. The memory cell may be stored in the memory of the data processing apparatus. In other words, the memory cell corresponds to a storage location or storage area within the memory of the data processing apparatus where the data is stored. This way, a specific technical implementation of the autoregressive neural network in the memory of the data processing apparatus is provided. As will become more apparent from the following disclosure, the autoregressive neural network may be particularly adapted for the implementation in the memory of the data processing apparatus.

It may be provided that the autoregressive neural network comprises a plurality of autoregressive neural network blocks which are configured to process the plurality of patch tokens, preferably as a sequence of patch tokens, in an alternating manner in accordance with different traversal paths. Preferably, each autoregressive neural network block processes the plurality or sequence of patch tokens. In a bi-directional setting, as will be explained further below, the plurality or sequence of patch tokens may be processed once in accordance with a first traversal patch and once in accordance with a second traversal path.

It may be provided that the autoregressive neural network comprises at least a first set of autoregressive neural network blocks and a second set of autoregressive neural network blocks. In this configuration, the plurality of patch tokens may be processed by the first set of autoregressive neural network blocks in accordance with a first traversal path. In addition, the plurality of patch tokens may be processed by the second set of autoregressive neural network blocks in accordance with a second traversal path different from the first traversal path. It may be provided that the first traversal path and the second traversal path have different directions, in particular opposing directions. It may be provided that the first traversal path and the second traversal path are row-wise.

It may be provided that the autoregressive neural network further comprises a third set of autoregressive neural network blocks and a fourth set of autoregressive neural network blocks. In this configuration, the plurality of patch tokens may be processed by the third set of autoregressive neural network blocks in accordance with a third traversal path. In addition, the plurality of patch tokens may be processed by the fourth set of autoregressive neural network blocks in accordance with a fourth traversal path different from the third traversal path. It may be provided that the third traversal path and the fourth traversal path have different directions, in particular opposing directions. It may be provided that the third traversal path and the fourth traversal path are column-wise.

It may be provided that the plurality of patch tokens is processed by the autoregressive neural network blocks of the different sets in an alternating manner. For example, to adjust the autoregressive neural network to computer vision, which is an often non-autoregressive domain, a stack or other arrangement of alternating autoregressive neural network blocks may be provided where odd blocks process the patches in one direction or traversal path and even blocks process the patches in the other direction or traversal path. In one particular configuration, odd blocks may process the plurality of patch tokens row-wise from top left to bottom right and even blocks go from bottom right to top left. By processing the plurality of patch tokens by the autoregressive neural network blocks of the different sets in an alternating manner, the neural network is enabled to efficiently process non-sequential inputs, such as images, without introducing additional computations.

It may be provided that the plurality of patch tokens is processed sequentially. It may be provided that the autoregressive neural network comprises a stack of autoregressive neural network blocks.

It may be provided that the autoregressive neural network blocks are xLSTM blocks, in particular mLSTM blocks. This way, the neural network exhibits linear computational and memory complexity with respect to sequence length. In contrast, ViT's computational complexity scales quadratically due to the self-attention mechanism, rendering them costly to apply to high-resolution tasks.

For example, the xLSTM blocks may comprise at least one exponential activation function. In other words, the at least one activation function may be the exponential function $\exp(x)$ or $e^x$. The xLSTM may comprise an input gate and the at least one exponential activation function may comprise an exponential input gate activation function. The LSTM may comprise a forget gate and the at least one exponential activation function may comprise an exponential forget gate activation function. Accordingly, the xLSTM may comprise an exponential input gate activation function, an exponential forget gate activation function, or both. It may be provided that the xLSTM comprises a (at least one) memory cell configured to store a matrix of values. In other words, the cell state C of the memory cell is a matrix, in particular

$C \in \mathbb{R}^{d \times d}$. This way, the xLSTM forms an mLSTM comprising a matrix memory cell. The matrix memory cell may be stored in the memory of the data processing apparatus. It may be provided that the mLSTM comprises a covariance update rule. These and other features of the xLSTM/mLSTM may be provided as disclosed in European patent application no. 24155883.2 titled "EXTENDED LONG SHORT-TERM MEMORY NEURAL NETWORKS" and European patent application no. 24174530.6 titled "EXTENDED LONG SHORT-TERM MEMORY NEURAL NETWORKS", the contents of which are incorporated herein by reference.

The hardware-efficient design makes the autoregressive neural network appealing for computer vision tasks. Accordingly, it may be provided that the method further comprises performing a computer vision task based at least in part on an output of the autoregressive neural network. The computer vision task may comprise one or more of image segmentation, image classification, medical imaging, and physics simulation.

Another aspect of the present invention concerns a data processing apparatus. The data processing apparatus may be configured for carrying out any of the methods disclosed herein.

Another aspect of the present invention concerns a computer program or a computer-readable medium having stored thereon a computer program. The computer program may comprise instructions which, when the program is executed by a computer, cause the computer to carry out any of the methods disclosed herein. A computer program may also be referred to as a program, software, a software application, an app, a module, a software module, a script, or code. A computer program may be written in a programming language, including compiled or interpreted languages. A computer program may be deployed in any form, including as a stand-alone product or as a module, component, subroutine, or other unit suitable for use in a computing environment.

Another aspect of the present invention relates to a non-transitory computer-readable medium storing a set of instructions that, when executed by one or more processors of an apparatus, cause the apparatus to carry out any of the methods disclosed herein.

The terms used herein should generally be construed as understood by the average person skilled in the art, unless explicitly indicated otherwise. The following explanations may guide the understanding:

The term "artificial Intelligence" (AI) should be understood as referring to a branch of computer science that aims to develop machines or software capable of intelligent behavior, typically with the goal to mirror or surpass human intelligence in specific tasks. AI systems are designed to perform complex tasks such as reasoning, learning, perception, problem-solving, and understanding natural language. These systems can typically adapt to new situations and improve their performance over time. The goal of AI is to create systems that can function autonomously and interact with their environment in a human-like manner.

The term "natural language processing" (NLP) should be understood as referring to a field of computer science and artificial intelligence that focuses on enabling computers to understand, interpret, and/or manipulate human language. It typically combines computational linguistics with statistical, machine learning, and deep-learning models to process human language in the form of text or voice data, allowing computers to comprehend the intent and sentiment of the speaker or writer. NLP usually involves tasks such as text and speech processing, natural language understanding, text analytics, and it has various applications, including machine translation, speech recognition, and chatbots for customer service, to name just a few.

The term "machine learning" (ML) should be understood as a subset of artificial intelligence that focuses on the development of algorithms and statistical models that enable computers to perform specific tasks without using explicit instructions. Instead, machine-learning systems learn and make predictions or decisions based on data. Machine-learning algorithms build a mathematical model based on sample data, known as training data, to make predictions or decisions without being explicitly programmed to perform the task. Machine learning can be employed in a variety of applications, including image and speech recognition, medical diagnosis, predictive analytics, and many more, where it enables systems to learn from and adapt to new data independently.

The term "machine-learning algorithm" should be understood as a computational procedure that is designed to analyze data, learn from it, and identify patterns or make decisions based on the input data without being explicitly programmed for the task. Machine-learning algorithms leverage statistical techniques to enable systems to improve their performance on a specific task with more data over time. Machine-learning algorithms are the foundation upon which machine-learning models are built, providing the methods or processes through which data is transformed into actionable insight. Examples of machine-learning algorithms include linear regression, decision trees, support vector machines, and neural networks, among others.

The term "machine-learning model" should be understood as referring to the output generated when a machine-learning algorithm is trained on a dataset. It represents the knowledge or understanding gained by the algorithm from the data, encapsulating the learned patterns or predictions. Essentially, a machine-learning model is what enables predictions or decisions based on new, unseen data, based on the learning it has derived from the training process. The machine-learning model is typically defined by its parameters, which may be adjusted during the training phase to minimize the difference between the predicted outcome and the actual outcome. Although, strictly speaking, "machine-learning algorithm" and "machine-learning model" have distinct definitions, it is not uncommon for these terms to be used interchangeably in casual discourse. This usage stems from the close relationship between algorithms and models in the workflow of machine-learning projects, where the algorithm is the means of creating the model. Therefore, these terms may be used synonymously herein unless the distinction is decisive.

The term "artificial neural network" (ANN), or "neural network" (NN) in short, should be understood as a machine-learning or deep-learning model or algorithm. Neural networks are generally inspired by the human brain and typically comprise interconnected nodes or neurons organized into layers. Neural networks can be used to process data and learn from examples, enabling them to perform tasks such as image recognition, natural language processing, and more. A neural network typically comprises an input layer, one or more hidden layers, and an output layer. Through a process called training, neural networks can learn to perform specific tasks by adjusting their internal parameters, or "weights", based on labeled or unlabeled data.

The term "training" should be understood as referring to the process of teaching a machine-learning model to make predictions or decisions, by exposing it to data for which the outcomes are known. The training process typically involves feeding a training dataset into a machine-learning algorithm, which then uses statistical analysis to learn the patterns or relationships within the data. During training, the algorithm iteratively adjusts the parameters of the model to minimize the difference between the predicted outcomes and the actual outcomes in the training data. This adjustment process is typically guided by a loss function, which measures the accuracy of the model's predictions. The goal of training is to produce a model that accurately represents the underlying structure of the data, enabling it to make reliable predictions about new, unseen data. Supervised learning involves training a model on a labeled dataset, where each example in the training data is paired with the correct output. The model learns to predict the output from the input data. Unsupervised learning involves training a model on data without labeled responses. The model tries to find patterns and relationships in the data on its own. Semi-supervised learning combines both labeled and unlabeled data during the training process, which can be beneficial when acquiring a fully labeled dataset is costly or impractical.

The term "activation function" should be understood as a function used in artificial neural networks which outputs a small value for small inputs, and a larger value if its inputs exceed a threshold. If the inputs are large enough, the activation function "fires", otherwise it does nothing. In other words, an activation function is like a gate that checks that an incoming value is greater than a critical number. Activation functions are useful because they add nonlinearities into neural networks, allowing the neural networks to learn powerful operations. Typical activation functions used in data science include the rectified linear unit (ReLU) function, and the family of sigmoid functions such as the logistic sigmoid function, the hyperbolic tangent, and the arctangent function.

The term "memory" in the context of a neural network should be understood as referring to a neural network's ability to retain and/or utilize information over time, allowing the neural network to learn from sequential data and/or to make predictions based on past inputs. The most basic form of memory in a neural network is embedded in its weights and biases, which are typically adjusted during the training process. These parameters store the learned patterns or features from the training data, allowing the network to recognize similar patterns in new data and make predictions accordingly. Recurrent neural networks (RNNs) introduce a more dynamic form of memory by incorporating loops within the network, allowing information to persist from one step of the data to the next. This architecture is particularly useful for tasks involving sequential data, such as speech recognition or language translation, as it enables the network to maintain a form of short-term memory regarding previous inputs. In the case of a Long Short-Term Memory (LSTM) network, memory may be implemented through specialized units called memory cells, which are typically controlled by three gates, namely the input gate, the forget gate, and the output gate. These gates may determine what information to store, discard, and/or output from the memory cell, enabling the neural network to capture long-term dependencies and make predictions across multiple time steps.

The term "input vector" should be understood as a numerical representation of the input data fed into a model or network for processing, or as a numerical representation of data derived from such input data. The term "vector", as used throughout this disclosure, may not be strictly limited to one-dimensional vectors, but may also encompass data having an $n$-dimensional structure with $n > 2$. The term "input vector" may also be used as a synonym to "input data", "data", "input token", "input sequence", and the like. In mathematical terms, an input vector typically comprises the values of the input features and is used to feed data into the network. The dimensionality of the input vector depends on the number of features considered by the model. For example, in natural language processing, an input vector could represent a word, sentence, or document, with each element indicating the presence, frequency, or encoding of words based on a predefined vocabulary.

The term "semantic information" should be understood as referring to the meaning or context conveyed by an input vector. Semantic information may be represented using embedding vectors, which are typically numerical representations of words, sentences, or documents.

Typically, the closer two embedding vectors are in the vector space, the more they represent semantically similar concepts. Therefore, embedding vectors may serve as a way to capture and represent the semantic content of the input data in a neural network. Semantic information typically goes beyond the mere syntactic arrangement of elements (such as words in a sentence or symbols in a code) to encompass the contextual and cultural nuances, intentions, and relationships that give data its meaning. For instance, in natural language processing, understanding semantic information allows AI models to grasp the meanings of sentences, differentiate between homonyms based on context, and recognize the relationships between concepts, enabling more accurate language translation, sentiment analysis, and question-answering systems.

The term "dual memory architecture" should be understood as comprising two memories configured for the purposes explained in more detail herein, but without excluding the presence of one or more additional memories or data storage mechanisms for other purposes.

The term "attention mechanism" should be understood as a technique that allows a neural network to focus on the most relevant parts of the input data. An attention mechanism may calculate "soft" weights for each element of the input sequence, allowing the neural network to selectively focus on specific parts of the data. This can be particularly useful for tasks like machine translation, where the neural network needs to align words in the input and output sequences.

The term "Transformer model" should be understood as a type of neural network model that is distinguished by its exclusive reliance on attention mechanisms, eschewing recurrent layers to process sequential data. At the core of the Transformer is the self-attention mechanism, which enables each position in the sequence to attend to all positions in the previous layer of the model simultaneously. This global perspective is said to allow the model to learn context and relationships between words or elements in the input sequence, regardless of their positional distance from each other. The Transformer model typically comprises an encoder and a decoder. The encoder processes the input sequence and transforms it into a continuous representation that holds all the learned information of that sequence. Each encoder layer typically has two sub-layers: a multi-head self-attention mechanism and a position-wise fully connected feed-forward network. The decoder generates the output sequence based on the encoder's representation and the previously generated elements. Each decoder layer typically has three sub-layers: a multi-head self-attention mechanism, a multi-head attention mechanism over the encoder's output, and a position-wise fully connected feed-forward network.

The term "autoregressive neural network" (ARNN) should be understood as a type of artificial neural network designed to predict future values in a sequence based on past values. This predictive capability is achieved through the use of autoregressive modeling, where the network iteratively estimates current data points using previous ones. In an ARNN, input features at each time step are derived from previous time steps, allowing the network to capture temporal dependencies and patterns within the data. The architecture typically includes layers of neurons arranged in a feedforward manner, with weights optimized through backpropagation to minimize prediction errors. ARNNs are widely used in time series forecasting, natural language processing, and other domains where sequential data is prevalent.

The term "recurrent neural network" (RNN) should be understood as a type of artificial neural network that is designed to work with sequential data or time series data. It is typically characterized by its ability to retain a memory of previous inputs and is often used in natural language processing, speech recognition, and other tasks that involve sequential patterns. RNNs are typically capable of processing input of any length, and the model size does not increase with the size of the input.

The term "gated neural network" should be understood as a type of neural network which incorporates one or more gating mechanisms to control the flow of information. These mechanisms may allow the network to regulate the information that passes through the layers of the network, effectively enabling it to learn complex patterns and dependencies in the data. Gated neural networks are particularly useful in tasks that involve sequential data, such as natural language processing (NLP) and time series analysis. In a gated neural network, a gate is typically implemented using an activation function or gating function, for example using sigmoidal functions or other types of activation functions that can output values between 0 and 1. These values are used to scale the activation passing through the network, effectively acting as switches that can either block or allow information to pass.

The term "long short-term memory" (LSTM) should be understood as disclosed in Hochreiter, Sepp & Schmidhuber, Jürgen. (1997). Long Short-term Memory. Neural computation. 9. 1735-80, the content of which is incorporated herein by reference. An LSTM may be understood as a type of RNN used in the field of deep learning. It is designed to overcome the limitations of traditional RNNs in learning and remembering long-term dependencies in sequential data. LSTMs are particularly well-suited for tasks such as speech recognition, language translation, and time series prediction due to their ability to retain and utilize information over extended periods. The architecture of an LSTM typically includes memory blocks that can maintain and update information over time, making them effective for modeling sequential data. An LSTM typically comprises or consists of three gates that regulate the flow of information: the forget gate, the input gate, and the output gate. These gates are responsible for controlling the retention and flow of information within the network. The forget gate decides what information to discard from the cell state, the input gate determines what new information to store in the cell state, and the output gate regulates the information that will be output to the next layer of the network.

The term "extended long short-term memory" (xLSTM) should be understood as disclosed in Beck, M., Pöppel, K., Spanring, M., Auer, A., Prudnikova, O., Kopp, M., Klambauer, G., Brandstetter, J., and Hochreiter, S. xLSTM: Extended Long Short-Term memory, 2024. arXiv:2405.04517 as well as in European patent application no. 24155883.2 titled "EXTENDED LONG SHORT-TERM MEMORY NEURAL NETWORKS" and European patent application no. 24174530.6 titled "EXTENDED LONG SHORT-TERM MEMORY NEURAL NETWORKS", the contents of which are incorporated herein by reference. For example, an xLSTM may be understood as an LSTM which is enhanced by exponential gating and, optionally, with appropriate normalization and/or stabilization techniques. An xLSTM may provide a modified memory structure as compared to the classic LSTM: (i) sLSTM with a scalar memory, a scalar update, and/or new memory mixing, (ii) mLSTM that is fully parallelizable with a matrix memory and/or a covariance update rule. These LSTM extensions may be integrated into residual block backbones, which provides xLSTM blocks which can be stacked in residual xLSTM architectures.

The term "large language model" (LLM) or "language model" should be understood as referring to a type of machine-learning model that has been trained to recognize, generate, translate, and/or summarize vast quantities of written human language and textual data. LLMs are notable for their ability to achieve general-purpose language generation. LLMs comprise a large number of parameters, typically in the millions or often billions of parameters, which enable them to capture a wide array of linguistic nuances, patterns, and contexts.

**BRIEF DESCRIPTION OF THE DRAWINGS**

The invention may be better understood by reference to the following drawings:

Fig. 1: A conceptual overview of Vision LSTM (ViL) in accordance with embodiments of the invention.

Fig. 2: A flow diagram of a method in accordance with embodiments of the invention.

Fig. 3: A schematic visualization of different traversal paths in accordance with embodiments of the invention.

Fig. 4: Exemplary hyperparameters for training ViL on ImageNet-1K in accordance with embodiments of the invention.

Fig. 5: Training curves for long-sequence fine-tuning of ViL models in accordance with embodiments of the invention.

Fig. 6: Training curves for long-sequence fine-tuning of ViL models in accordance with embodiments of the invention.

Fig. 7: Exemplary hyperparameters for training a reimplementation of DeiT-III-T on ImageNet-1K in accordance with embodiments of the invention.

Fig. 8: A schematic view of an mLSTM memory cell in accordance with embodiments of the invention.

Fig. 9: A schematic block diagram of computer hardware usable for carrying out the method of Fig. 2.

**DETAILED DESCRIPTION**

In the following, representative embodiments illustrated in the accompanying drawings will be explained. It should be understood that the illustrated embodiments and the following descriptions refer to examples which are not intended to limit the embodiments to one preferred embodiment.

Today, Transformers are widely used as generic backbones in computer vision, despite initially introduced for natural language processing. Recently, the Long Short-Term Memory (LSTM) has been extended to a scalable and performant architecture, the xLSTM, which overcomes long-standing LSTM limitations via exponential gating and parallelizable matrix memory structure. Certain embodiments of the present invention provide an adaption of the xLSTM building blocks to computer vision which is also referred to as Vision LSTM (ViL), and which will be described in the following.

VISION LSTM OVERVIEW

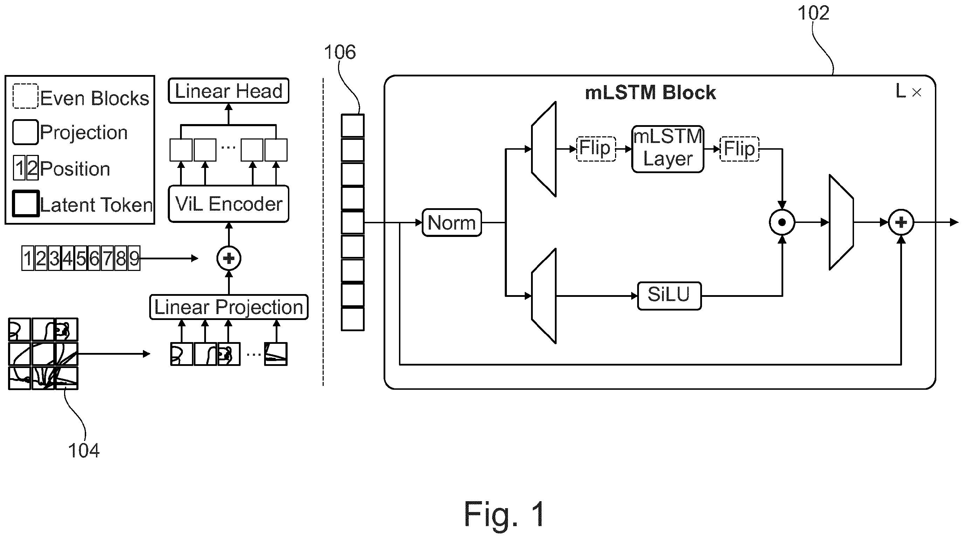

Fig. 1 illustrates a conceptual overview of Vision LSTM (ViL) in accordance with an exemplary embodiment of the invention. As can be seen, the illustrated embodiment provides a generic backbone for computer vision tasks, which is residually built from xLSTM blocks 102.

In the illustrated embodiment, an input image 104 is split into patches (which are nonoverlapping patches in the illustrated embodiment) and linearly projected, e.g., via a shared linear projection.

Learnable positional embeddings are added to each patch token. In other words, a learnable vector is added per position to the patches, producing a sequence of patch tokens 106. Alternatively, the patches may also be simply labelled with positional information, such as identifiers. Accordingly, this step may comprise adding positional information to the patches to generate the patch tokens.

At the core of the embodiment shown in Fig. 1 are alternating mLSTM blocks 102. Preferably, the mLSTM blocks 102 are fully parallelizable and equipped with a matrix memory and a covariance update rule. Although the blocks 102 shown in Fig. 1 and described herein are mLSTM blocks, alternative embodiments may be provided in which the blocks 102 are any type of autoregressive neural network blocks, or more generally any type of suitable neural network blocks.

"Alternating" means that there are at least two sets of blocks 102 which process the patch tokens 106 in different ways. In the illustrated embodiment, odd blocks 102 process patch tokens 106 from top left to bottom right while even blocks 102 process patch tokens 106 from bottom right to top left. In one implementation, this can be achieved in that even mLSTM blocks flip the sequence of patch tokens 106 before and after the mLSTM layer, as shown in Fig. 1. It should be noted that the direction in which the sequence of patch tokens 106 is processed by the groups of blocks 102 could also be the other way around, i.e., odd blocks 102 may process patch tokens 106 from bottom right to top left while even blocks 102 may process patch tokens 106 from top left to bottom right. What is important is that the sequence of patch tokens 106 gets processed in different ways by the sets of blocks 102. This is a fundamental difference to Transformers which do not have such a recursive processing capability.

In certain embodiments, the number of blocks 102 is independent of the number of patch tokens 106. Take, as an example, a 9x9 pixel input image 104, which can be split into patches of size 3x3 pixel, which gives nine patch tokens 106. Each block 102 processes the patch tokens 106. In certain embodiments, the patch tokens 106 are processed sequentially, and thus there are more ways to process them. In one embodiment, the sequence of patch tokens 106 is processed once in one direction (or more generally in one way) and once in the other direction (or more generally in another way).

COMPUTER VISION METHOD

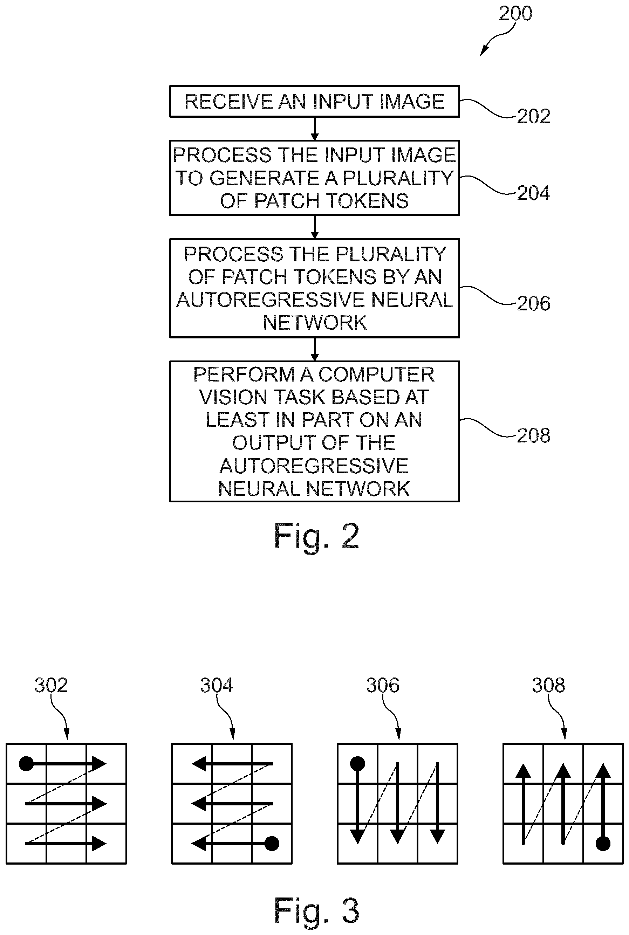

Fig. 2 illustrates a flowchart of a method 200 in accordance with an exemplary embodiment. The method 200 receives an input image 104 in step 202. The method 200 processes the input image 104 to generate a plurality of patch tokens 106 in step 204. The method 200 processes the plurality of patch tokens 106 by an autoregressive neural network, such as the neural network described in connection with Fig. 1, in step 206. The method 200 performs a computer vision task, such as image classification, based at least in part on an output of the autoregressive neural network in step 208.

BLOCK DESIGN VARIANTS

In certain embodiments, ViL comprises a stack of xLSTM blocks 102 where odd blocks 102 process the sequence of patch tokens 106 in one way, e.g., from top to bottom, while even blocks 102 process the sequence of patch tokens 106 in another way, e.g., from bottom to top. Experiments show that ViL holds promise to be further deployed as new generic backbone for computer vision architectures.

In the following, different embodiments of ViL block designs are described as summarized in the following table:

| Direction | Alternating | Parameter Sharing | ACC | #Param | FLOPS | Runtime |
|---|---|---|---|---|---|---|
| Uni-directional | No | No | 72.8 | 6.1M | 1.0x | 1.0x |
| Bi-directional | No | No | 73.9 | 6.5M | 1.5x | 1.9x |
| Bi-directional | No | Yes | 73.3 | 6.1M | 1.5x | 1.9x |
| Bi-directional | Yes | No | **74.8** | 6.1M | 1.0x | 1.0x |
| Quad-directional | No | No | 73.3 | 7.3M | 2.3x | 7.5x |
| Quad-directional | No | Yes | 72.2 | 6.1M | 2.3x | 7.5x |
| Quad-directional | Yes | No | **75.1** | 6.1M | 1.0x | 1.9x |

The FLOPS in the above table have been calculated with the fvcore library. As fvcore does not support all operations certain embodiments of ViL, the FLOPS may not be 100% accurate, but nevertheless serve as a good reverence point to compare the relative computational effort between block designs.

As can be seen, one design comprises uni-directional blocks. The plain, uni-directional xLSTM block fails to reach competitive performance since the autoregressive nature of xLSTM is less suited for image classification or other computer vision tasks.

Another design comprises bi-directional blocks. Traversing blocks in a bi-directional manner, e.g., by introducing a second mLSTM layer in each block that traverses the sequence backwards, improves performance, but also requires more parameters and FLOPS. Sharing the parameters of the forward and backward mLSTM makes the model more parameter efficient, but still requires more compute and overloads these parameters which leads to performance drops. Using alternating blocks enhances performance while remaining compute and parameter efficient.

Another design comprises quad-directional blocks. In certain embodiments, the quad-directional design involves traversing the sequence row-wise (in both directions) and additionally column-wise (in both directions). In certain embodiments, the bi-directional design involves traversing the sequence only row-wise (in both directions) or only column-wise (in both directions).

Fig. 3 visualizes corresponding traversal paths. As can be seen, the first traversal path 302 traverses the patch tokens row-wise from top left to bottom right. The second traversal path 304 traverses the patch tokens row-wise from bottom right to top left. The third traversal path 306 traverses the patch tokens column-wise from top left to bottom right. The fourth traversal path 308 traverses the patch tokens column-wise from bottom right to top left. In certain embodiments, the bi-directional design uses the traversal paths 302 and 304. In certain embodiments, the quad-directional design uses the traversal paths 302, 304, 306, 308.

Due to the increased cost of bi-directional and quad-directional blocks, the study which produced the results show in the above table was conducted in a heavily reduced setting. We train on a subset of ImageNet-1K that contains only samples from 100 classes for 400 epochs at 128x128 resolution. This was particularly necessary because our quad-directional implementation is not compatible with torch.compile (a generic speed optimization method from PyTorch), which leads to longer runtimes, as indicated last column of the table above. Due to this technical limitation, the alternating bi-directional block was chosen as the core design of certain embodiments.

In other words, traversing the sequence of patch tokens in multiple directions yields better performance than the vanilla xLSTM block. However, using multiple directions per block also requires more compute and parameters. Sharing parameters between directions matches #Params but overloads them, leading to performance drops. Using one direction per block but alternating between them, matches #Params and FLOPS while achieving the best performances. While an alternating quad-directional design yields the best performance, it comes with increased runtime due to current technical limitations.

USE FOR IMAGE CLASSIFICATION

In order to perform image classification as an example of a computer vision task with a ViT, in certain embodiments the sequence of tokens 106 is pooled into a single token, which is then used as input to a classification head. One way of performing such a pooling is (i) adding a learnable [CLS] token at the start of the sequence or (ii) averaging all patch tokens to produce an [AVG] token. Whether to use the [CLS] or [AVG] token is typically a hyperparameter, where both variants achieve comparable performances.

On the contrary, autoregressive models often require specialized classification designs. For example, Vim requires the [CLS] token to be in the middle of the sequence, suffering heavy performance losses if other classification designs, e.g., an [AVG] token or two [CLS] tokens at start and end of the sequence, are employed.

Due to the autoregressive nature of embodiments of the invention, we explore different classification designs for ViL in the following table. [AVG] averages all patch tokens, "Middle Patch" uses the middle patch token, "Middle [CLS]" uses a [CLS] token in the middle of the sequence, "Bilateral [AVG]" uses the average of the first and last patch token.

We find ViL to be relatively robust the classification design where all performances are within 0.7%. In certain embodiment, we choose "Bilateral [AVG]" over "Middle [CLS]", as ImageNet-1K is known to have a center bias, i.e., objects are commonly located in the middle of the picture. By using "Bilateral [AVG]" we avoid exploiting this bias, which makes the model more general.

| Arch | ACC |
| --- | --- |
| [AVG] | 75.4 |
| Middle Patch | **75.9** |
| Middle [CLS] | 75.3 |
| Bilateral [AVG] | **75.9** |
| *Bilateral Concat* | *76.4* |

As can be seen, the above table gives guidance on how to pool the sequence of patch tokens into a single token for classification. Embodiments of ViL are relatively robust to the classification design. Using the middle patch token and averaging the first and last token ("Bilateral [AVG]") work similarly well. The good performance of middle patch could be caused by the bias in ImageNet-1K that objects are typically in the center of the image. We therefore choose "Bilateral [AVG]" to avoid exploiting this bias. "Bilateral Concat" concatenates the first and last patch token which introduces additional parameters in the classification head. To save compute, we conduct this study by training a ViL-T on ImageNet-1K for 400 epochs in 192x192 resolution followed by fine-tuning for 20 epochs on 224x224 resolution.

To remain comparable to previous architectures that use a single token as input to the classification head, certain embodiments may average the first and last patch. To achieve best performances, we suggest to concatenate the two tokens ("Bilateral Concat") instead of averaging them. This is similar to common practices in self-supervised vision transformers, such as DINOv2, which are trained with two objectives that are attached at the [CLS] and [AVG] token respectively and therefore benefit from concatenating the representation of [CLS] and [AVG] token. This directions has also been explored for vision SSM models where multiple [CLS] tokens are spread out over the sequence and then used as input to a classifier. Similar directions could also improve the performance of ViL.

EXPERIMENTAL RESULTS

We conducted experiments on ImageNet-1K, which contains 1.3M training images and 50K validation images where each image belongs to one of 1,000 classes. Our comparison focuses on models that use a sequence modeling backbone and are roughly comparable in parameter counts.

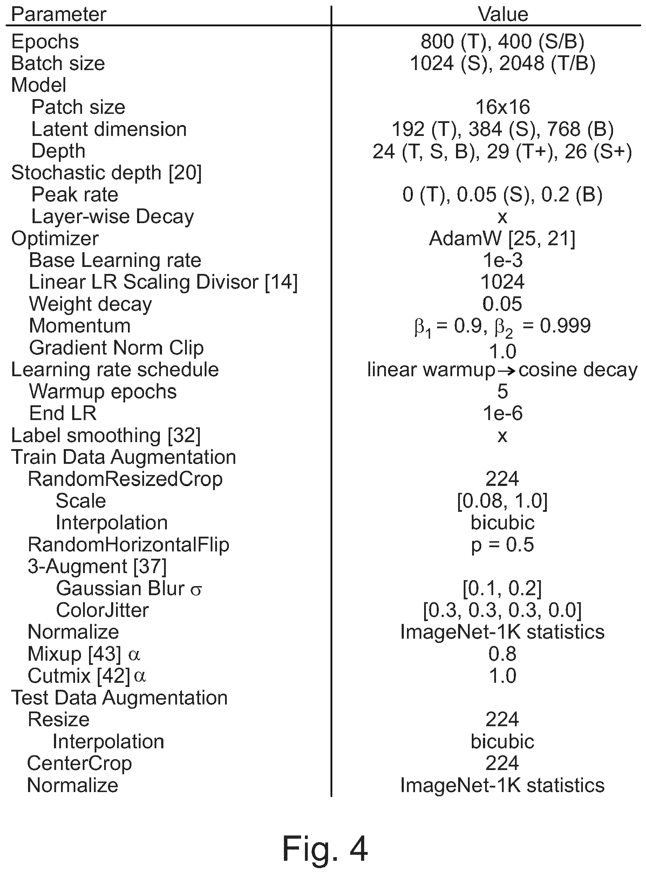

We trained ViL models for 400 epochs on 224x224 resolution with a learning rate of 1e-3 using a cosine decay schedule. Fig. 4 illustrates detailed hyperparameters used to train ViL models. In the "long-sequence finetuning" setting, we fine-tune for 30 epochs with a learning rate of 1e-5, a weight decay of 1e-8 using an overlap of 50% (8 pixels) between consecutive patches. This increases the sequence length from 196 to 729.

To facilitate a fair comparison against Vision Mamba (Vim), we add additional blocks to our models to match parameter counts for the tiny and small variants (denoted as ViL-T+ and ViL-S+). Note that ViL requires significantly less compute than Vim since ViL traverses the sequence in an alternating way, whereas Vim traverses the sequence twice per block. This holds despite Vim using optimized CUDA kernels, which currently do not exist for mLSTM, and would speed-up ViL even more. The following table compares the time it takes to train ViL and Vim for a single ImageNet-1K epoch following the scaling procedure of ViTs, using 192 (T), 384 (S), 768 (B), 1024 (L) as latent dimension where the large scale additionally doubles the number of blocks:

| | Optimization | (T)iny | (S)mall | (B)ase | (L)arge |
|---|---|---|---|---|---|
| Vim | custom CUDA kernel | 7.3h | 14.0h | 28.2h | 97.7h |
| ViL | torch.compile | 5.0h | 8.7h | 16.6h | 45.1h |
| Speedup of ViL compared to Vim | | 45% | 61% | 69% | 69% |

As can be seen, ViL is up to 69% faster despite the current lack of a custom CUDA kernel. As mLSTM (and ViL) can be parallelized analogous to FlashAttention via custom hardware optimizations, ViL can be expected to become even faster in the future. Runtimes are extrapolated from short benchmark runs on a single A100-80GB-PCIe using float16 precision and 224x224 images.

As ViTs are well established in the vision community, they underwent multiple optimization cycles over the years. As the present invention is the first to apply xLSTM to computer vision, we do not expect to outperform years of hyperparameter tuning of ViTs in all cases. Even so, the results in the following table demonstrate that ViL shows favorable results to heavily optimized ViT protocols (DeiT, DeiT-II, DeiT-III) on smaller scales where only DeiT-III-S that was trained twice as long as ViL-S performs slightly better. On the "base" scale, ViL outperforms all comparable ViT baselines when additionally fine-tuning the model in a "long-sequence fine-tuning" setting (see Zhu, L., Liao, B., Zhang, Q., Wang, X., Liu, W., and Wang, X. Vision mamba: Efficient visual representation learning with bidirectional state space model. CoRR, abs/2401.09417, 2024.) which finetunes the model for 30 epochs with an increased sequence length of 729 by using 50% overlap between consecutive patch tokens.

Notably, larger ViTs do not benefit from this setting due to overfitting. ViL also demonstrates competitive performance with CNN-based models such as ConvNeXt, despite not leveraging the inductive bias inherent to convolutions:

| Method | #Params | ACC |
|---|---|---|
| DeiT-T | 6M | 72.2 |
| DeiT-II-T | 6M | 73.5 |
| DeiT-III-T (reimpl.) | 6M | 75.6 |
| Vim-T | 7M | 76.1 |
| ViL-T | 6M | 77.3 |
| ViL-T+ | 7M | **78.1** |
| DeiT-S | 22M | 79.8 |
| DeiT-II-S | 22M | 80.7 |
| *DeiT-III-S* | *22M* | 81.4 |
| Vim-S | 26M | 80.5 |
| ViL-S | 23M | 80.7 |
| ViL-S+ | 26M | **80.9** |

(continued)

| Method | #Params | ACC |
|---|---|---|
| ViT-B$_{384}$ | 86M | 77.9 |
| DeiT-B | 86M | 81.8 |
| DeiT-II-B | 86M | **82.7** |
| *DeiT-III-B* | *86M* | 83.7 |
| ViL-B | 88M | 81.6 |
| *Long-sequence fine-tuning* | | |
| DeiT-III-T (reimpl.) | 6M | 78.0 |
| Vim-T | 7M | 78.3 |
| ViL-T+ | 7M | **80.0** |
| DeiT-S | 22M | 81.4 |
| *DeiT-III-S* | *22M* | *83.0* |
| Vim-S | 26M | 81.6 |
| ViL-S+ | 26M | **82.2** |
| DeiT-B | 86M | 82.6 |
| *DeiT-III-B* | *86M* | *83.1* |
| ViL-B | 88M | **82.7** |
| *CNN-based models* | | |
| ConvNeXt-T | 30M | 82.2 |
| ConvNeXt-S | 50M | 83.1 |
| ConvNeXt-B | 89M | 83.8 |
| *SSM-based models* | | |
| S4ND-Conv-T | 30M | 82.2 |
| S4ND-ViT-B | 89M | 80.4 |

In the table above, entries in italic font are trained for 400 epochs more than ViL. "Long-sequence fine-tuning" fine-tunes models with 50% overlapping patches for 30 epochs. We train DeiT models in the long-sequence fine-tuning setting as DeiT-II has no public checkpoints and DeiT-III only published checkpoints with longer training durations.

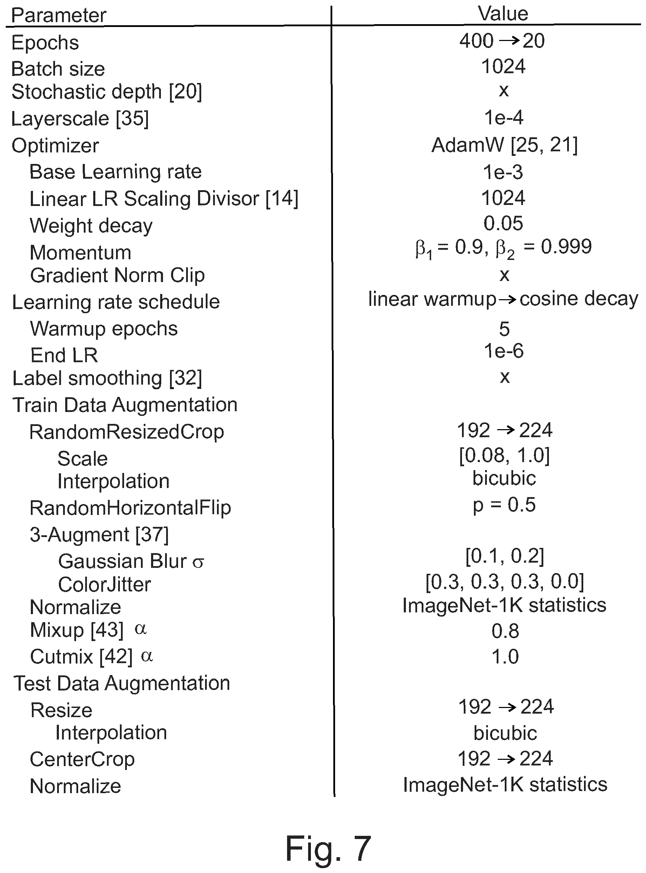

Hyperparameters used to train DeiT-III-T (reimpl.) mentioned in the above table are illustrated in Fig. 7. The most significant change is that we reduce the learning rate from 3e-3 to 1e-3 as we found this to greatly improve performance. We make minor changes to the protocol such as using AdamW, a 1024 batchsize instead of 2048. We follow the best setting from DeiT-III and pre-train on 192 resolution followed by a short fine-tuning on 224 resolution (indicated by →).

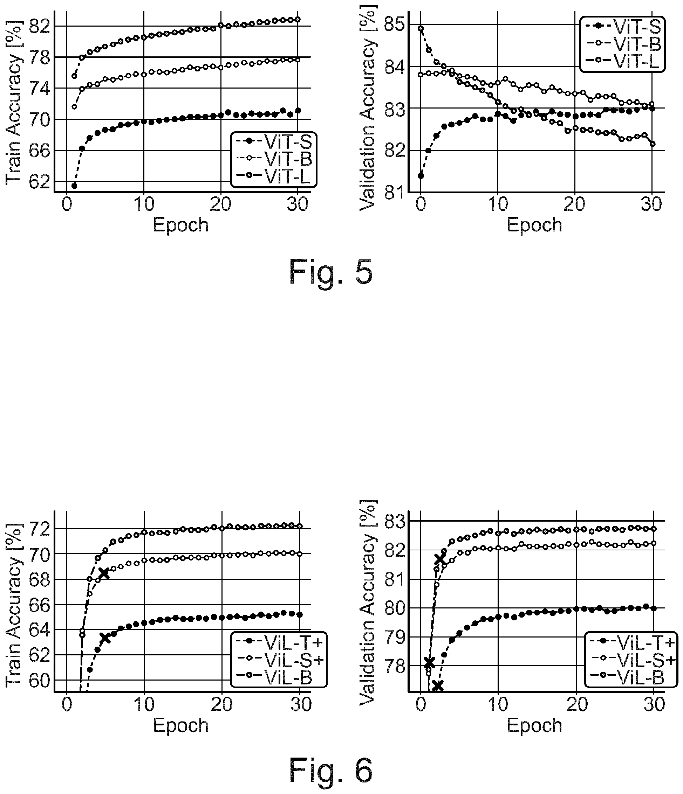

In the following, more details and discussion regarding the long-sequence finetuning setting with ViTs will be provided. As shown in the table above, DeiT-III-B does not benefit from increasing the sequence length by using patches with 50% overlap instead of non-overlapping patches. We hypothesize that since large ViTs do not lose any information when encoding the pixels, they do not benefit from overlapping patches as they can already encode all pixels into their patch tokens without information loss. This is possible since a ViT-B has a latent dimension of 768 and a 16x16 patch with 3 color channels contains 16x16x3=768 values. In this setting, the first linear projection is a square matrix that could simply perform an identity projection by using the identity matrix. Additionally, transformers "see" all patch tokens at once within the self-attention block. We hypothesize that since the long-sequence fine-tuning setting does not provide more information to transformers, but only more computation capacity, larger ViTs overfit in this setting and therefore drop in performance. We provide more evidence for this hypothesis by fine-tuning the 300M parameter model DeiT-III-L in the long-sequence fine-tuning setting which also overfits as indicated by an increasing training accuracy while validation accuracy decreases. This behavior is visualized in Fig. 5. As can be seen, larger ViTs tend to overfit in the long-sequence fine-tuning setting as the training accuracy increases but the validation accuracy decreases significantly. Overfitting is more severe on larger models. Validation accuracy before long-sequence fine-tuning is shown in epoch 0.

Contrary, ViL greatly benefit from the long-sequence setting, which we hypothesize stems from the transition between two consecutive patches becoming "smoother". For example, ViL does not have to store all the content of the previous patch in the memory cells since the next patch still contains half of the information from the previous patch. We hypothesize that this increases storage capacity and is therefore highly useful for sequential vision models, also for larger models. This can be observed in Fig. 6, where the performance of ViL-B greatly improves in the long-sequence fine-tuning setting, whereas the performance of larger DeiT-III models drops. Interestingly, the performance of ViL is initially much worse than before fine-tuning, but quickly recovers and surpasses pre-training performance. We hypothesize that since the long-sequence fine-tuning setting produces almost four times the amount of tokens, the model initially has to adjust for that.

As can be seen in Fig. 6, performance drops heavily initially, but quickly recovers and reaches a new high. ViL does not overfit, even with ViL-B and instead drastically improves during the long-sequence fine-tuning. The point where the accuracy surpasses the accuracy of the model before fine-tuning is marked with a bold cross. Notably, ViLB never surpasses the training accuracy it reached before fine-tuning.

We investigate training for a longer duration on ViL-T+ and train it for 400 and 800 epochs following the hyperparameters shown further above. After 400 epochs, ViL-T+ achieves 77.2% accuracy and after doubling the training duration the model achieves 78.1% accuracy.

IMPLEMENTATION DETAILS

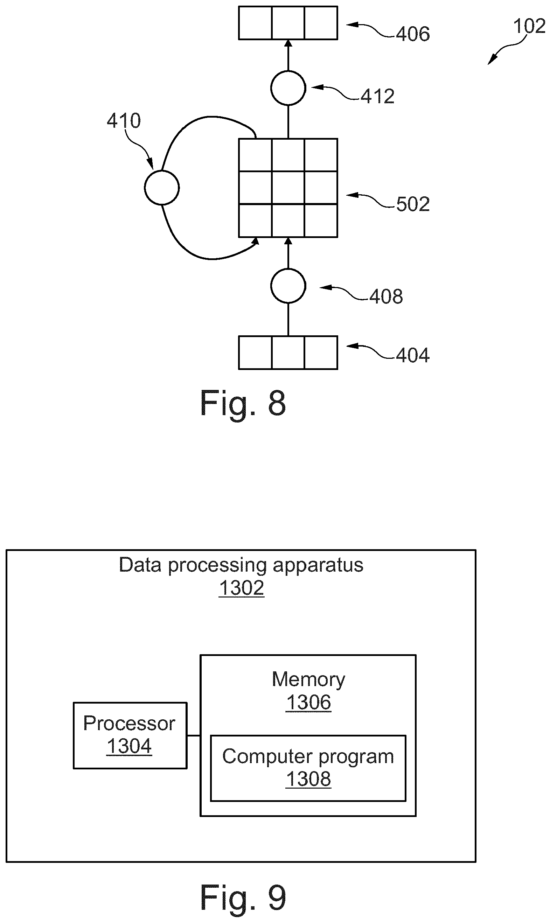

Fig. 8 illustrates a schematic view of an mLSTM block 102 in accordance with certain embodiments of the invention. The mLSTM 102 comprises a matrix memory 502 (in the illustrated example a $3 \times 3$ matrix), a cell input 404, a cell output 406, an input gate 408, a forget gate 410, and an output gate 412. The activation function of the input gate 408 is the exponential function. The activation function of the forget gate 410 is either the exponential function or a conventional activation function, such as Sigmoid. The activation function of the output gate 412 is a conventional activation function, such as Sigmoid.

Fig. 9 illustrates a schematic block diagram of computer hardware usable for carrying out the method shown in Fig. 2 and/or for storing and/or processing embodiments of the neural network system shown in Fig. 1 and/or any other neural network disclosed herein. As can be seen, a data processing apparatus 1302 is provided. The data processing apparatus 1302 comprises one or more processors, one of which is exemplarily shown as processor 1304.

The data processing apparatus 1302 comprises a memory 1306. The one or more processors 1304 are communicatively coupled to the memory 1306. The memory 1306 comprises a computer program 1308. The computer program 1308 may implement some or all aspects of the disclosed methods and systems.

CONCLUSION

Motivated by the success of xLSTM in language modeling, we introduced ViL, an adaption of the xLSTM architecture to vision tasks. Certain embodiments of ViL process a sequence of patch tokens in alternating fashion. For example, odd blocks may process image patches row-wise from top right to bottom left and even blocks may go from bottom left to top right, or in another similar configuration.

The new architecture outperforms SSM-based vision architectures and also optimized ViT models on ImageNet-1K classification. Remarkably, ViL is able to outperform ViT training pipelines, that resulted from years of hyperparameter tuning and transformer improvements, in fair comparisons.

In the future, we see potential in applying ViL when high-resolution images are needed for optimal performance, such as semantic segmentation or medical imaging. In these settings, transformers suffer from high computational costs due to the quadratic complexity of self-attention, which ViL does not have due to its linear complexity. Additionally, improving pre-training schemes (e.g., via self-supervised learning), exploring better hyperparameter settings or transferring techniques from transformers (e.g. LayerScale) are promising directions of ViL.

FURTHER EMBODIMENTS

Although specific exemplary embodiments of the invention have been described, the person skilled in the art will readily understand that alternative embodiments may comprise only individual aspects, components, building blocks, or subsets thereof, which may provide their individual benefits as disclosed herein.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the invention may be implemented on a computer system. The computer system may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein. A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

**Claims**

**1.** A method (200) of performing computer vision on a data processing apparatus (1302), comprising:

> receiving (202) an input image (104);
> processing (204) the input image (104) to generate a plurality of patch tokens (106); and
> processing (206) the plurality of patch tokens (106) by an autoregressive neural network.

2. The method of claim 1, wherein the autoregressive neural network is an autoregressive language model.

3. The method of claim 1 or 2, wherein the autoregressive neural network comprises a first set of autoregressive neural network blocks (102) and a second set of autoregressive neural network blocks (102);

   wherein the plurality of patch tokens (106) is processed by the first set of autoregressive neural network blocks (102) in accordance with a first traversal path (302); and
   wherein the plurality of patch tokens (106) is processed by the second set of autoregressive neural network blocks (102) in accordance with a second traversal path (304) different from the first traversal path (302).

4. The method of claim 3, wherein the first traversal path (302) and the second traversal path (304) have different directions, in particular opposing directions.

5. The method of claim 3 or 4, wherein the first traversal path (302) and the second traversal path (304) are row-wise.

6. The method of any one of claims 3 to 5, wherein the autoregressive neural network further comprises a third set of autoregressive neural network blocks (102) and a fourth set of autoregressive neural network blocks (102);

   wherein the plurality of patch tokens (106) is processed by the third set of autoregressive neural network blocks (102) in accordance with a third traversal path (306); and
   wherein the plurality of patch tokens is processed by the fourth set of autoregressive neural network blocks (102) in accordance with a fourth traversal path (308) different from the third traversal path (308).

7. The method of claim 6, wherein the third traversal path (306) and the fourth traversal path (308) have different directions, in particular opposing directions.

8. The method of claim 6 or 7, wherein the third traversal path (306) and the fourth traversal path (308) are column-wise.

9. The method of any one of claims 3 to 8, wherein the plurality of patch tokens (106) is processed by the autoregressive neural network blocks (102) of the different sets in an alternating manner.

10. The method of any one of claims 1 to 9, wherein the plurality of patch tokens (106) is processed sequentially.

11. The method of any one of claims 1 to 10, wherein the autoregressive neural network comprises a stack of autoregressive neural network blocks (102).

12. The method of any one of claims 1 to 11, further comprising:
    performing (208) a computer vision task based at least in part on an output of the autoregressive neural network.

13. The method of any one of claims 1 to 12, wherein the autoregressive neural network comprises or consists of a plurality of xLSTM blocks (102), in particular mLSTM blocks, preferably in a stacked arrangement.

14. A data processing apparatus (1302) comprising means for carrying out the method of any one of claims 1 to 13.

15. A computer program (1308) or a computer-readable medium having stored thereon a computer program (1308), the computer program comprising instructions which, when the program is executed by a computer, cause the computer to carry out the method of any one of claims 1 to 13.

Fig. 1

200

RECEIVE AN INPUT IMAGE —202

PROCESS THE INPUT IMAGE TO GENERATE A PLURALITY OF PATCH TOKENS —204

PROCESS THE PLURALITY OF PATCH TOKENS BY AN AUTOREGRESSIVE NEURAL NETWORK —206

PERFORM A COMPUTER VISION TASK BASED AT LEAST IN PART ON AN OUTPUT OF THE AUTOREGRESSIVE NEURAL NETWORK —208

Fig. 2

302        304        306        308

Fig. 3

| Parameter | Value |
|---|---|
| Epochs | 800 (T), 400 (S/B) |
| Batch size | 1024 (S), 2048 (T/B) |
| Model | |
|   Patch size | 16x16 |
|   Latent dimension | 192 (T), 384 (S), 768 (B) |
|   Depth | 24 (T, S, B), 29 (T+), 26 (S+) |
| Stochastic depth [20] | |
|   Peak rate | 0 (T), 0.05 (S), 0.2 (B) |
|   Layer-wise Decay | x |
| Optimizer | AdamW [25, 21] |
|   Base Learning rate | 1e-3 |
|   Linear LR Scaling Divisor [14] | 1024 |
|   Weight decay | 0.05 |
|   Momentum | $\beta_1 = 0.9$, $\beta_2 = 0.999$ |
|   Gradient Norm Clip | 1.0 |
| Learning rate schedule | linear warmup$\rightarrow$cosine decay |
|   Warmup epochs | 5 |
|   End LR | 1e-6 |
| Label smoothing [32] | x |
| Train Data Augmentation | |
|   RandomResizedCrop | 224 |
|     Scale | [0.08, 1.0] |
|     Interpolation | bicubic |
|   RandomHorizontalFlip | p = 0.5 |
|   3-Augment [37] | |
|     Gaussian Blur $\sigma$ | [0.1, 0.2] |
|     ColorJitter | [0.3, 0.3, 0.3, 0.0] |
|   Normalize | ImageNet-1K statistics |
|   Mixup [43] $\alpha$ | 0.8 |
|   Cutmix [42] $\alpha$ | 1.0 |
| Test Data Augmentation | |
|   Resize | 224 |
|     Interpolation | bicubic |
|   CenterCrop | 224 |
|   Normalize | ImageNet-1K statistics |

## Fig. 4

Fig. 5

Fig. 6

| Parameter | Value |
|---|---|
| Epochs | $400 \rightarrow 20$ |
| Batch size | 1024 |
| Stochastic depth [20] | x |
| Layerscale [35] | 1e-4 |
| Optimizer | AdamW [25, 21] |
|   Base Learning rate | 1e-3 |
|   Linear LR Scaling Divisor [14] | 1024 |
|   Weight decay | 0.05 |
|   Momentum | $\beta_1 = 0.9,\ \beta_2 = 0.999$ |
|   Gradient Norm Clip | x |
| Learning rate schedule | linear warmup $\rightarrow$ cosine decay |
|   Warmup epochs | 5 |
|   End LR | 1e-6 |
| Label smoothing [32] | x |
| Train Data Augmentation | |
|   RandomResizedCrop | $192 \rightarrow 224$ |
|     Scale | [0.08, 1.0] |
|     Interpolation | bicubic |
|   RandomHorizontalFlip | p = 0.5 |
|   3-Augment [37] | |
|     Gaussian Blur $\sigma$ | [0.1, 0.2] |
|     ColorJitter | [0.3, 0.3, 0.3, 0.0] |
|   Normalize | ImageNet-1K statistics |
|   Mixup [43] $\alpha$ | 0.8 |
|   Cutmix [42] $\alpha$ | 1.0 |
| Test Data Augmentation | |
|   Resize | $192 \rightarrow 224$ |
|     Interpolation | bicubic |
|   CenterCrop | $192 \rightarrow 224$ |
|   Normalize | ImageNet-1K statistics |

# Fig. 7

Fig. 8

Fig. 9

Europäisches
Patentamt

European
Patent Office

Office européen
des brevets

# EUROPEAN SEARCH REPORT

**Application Number**

EP 24 18 0452

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUE LIU ET AL: "VMamba: Visual State Space Model", ARXIV.ORG, CORNELL UNIVERSITY LIBRARY, 201 OLIN LIBRARY CORNELL UNIVERSITY ITHACA, NY 14853, 26 May 2024 (2024-05-26), XP091767397, * abstract; figures 1-3, 12; tables 3-4 * * sections 1-5 * | 1-15 | INV. G06N3/0442 G06N3/09 ADD. G06N3/048 |
| X | BENCHENG LIAO ET AL: "ViG: Linear-complexity Visual Sequence Learning with Gated Linear Attention", ARXIV.ORG, CORNELL UNIVERSITY LIBRARY, 201 OLIN LIBRARY CORNELL UNIVERSITY ITHACA, NY 14853, 28 May 2024 (2024-05-28), XP091771272, * abstract; figure 2 * * sections 1-5 and Appendix A-D * | 1-15 | |
| X | YAZHE LI ET AL: "Denoising Autoregressive Representation Learning", ARXIV.ORG, CORNELL UNIVERSITY LIBRARY, 201 OLIN LIBRARY CORNELL UNIVERSITY ITHACA, NY 14853, 8 March 2024 (2024-03-08), XP091695278, * abstract; figures 1, 7, 10-14 * * sections 3-5 * | 1-15 | TECHNICAL FIELDS SEARCHED (IPC) G06N |
| X | MAXIMILIAN BECK ET AL: "xLSTM: Extended Long Short-Term Memory", ARXIV.ORG, CORNELL UNIVERSITY LIBRARY, 201 OLIN LIBRARY CORNELL UNIVERSITY ITHACA, NY 14853, 7 May 2024 (2024-05-07), XP091750169, | 1,2, 10-15 | |
| A | * the whole document * | 3-9 | |

-/--

The present search report has been drawn up for all claims

| Place of search | Date of completion of the search | Examiner |
|---|---|---|
| The Hague | 7 November 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

**Application Number**

EP 24 18 0452

### DOCUMENTS CONSIDERED TO BE RELEVANT

| Category | Citation of document with indication, where appropriate, of relevant passages | Relevant to claim |
|---|---|---|
| A | Hu Vincent Tao ET AL: "ZigMa: A DiT-style Zigzag Mamba Diffusion Model", ArXiv, 1 April 2024 (2024-04-01), pages 148-166, XP093221756, DOI: 10.1007/978-3-031-72664-4_9 ISBN: 978-3-031-72664-4 Retrieved from the Internet: URL:https://arxiv.org/pdf/2403.13802 [retrieved on 2024-11-06] * the whole document * ----- | 1-15 |
| A | Zhu Lianghui ET AL: "Vision Mamba: Efficient Visual Representation Learning with Bidirectional State Space Model", ArXiv, 10 February 2024 (2024-02-10), XP093221179, Retrieved from the Internet: URL:https://arxiv.org/pdf/2401.09417v2 [retrieved on 2024-11-06] * the whole document * ----- | 1-15 |
| A | Dosovitskiy Alexey ET AL: "An Image is Worth 16x16 Words: Transformers for Image Recognition at Scale", International Conference on Learning Representations (ICLR 2021), 4 May 2021 (2021-05-04), pages 1-21, XP055901777, Retrieved from the Internet: URL:https://web.archive.org/web/2021050420 2650/https://openreview.net/forum?id=YicbF dNTTy [retrieved on 2022-03-16] * the whole document * ----- | 1-15 |

**CLASSIFICATION OF THE APPLICATION (IPC)**

**TECHNICAL FIELDS SEARCHED (IPC)**

The present search report has been drawn up for all claims

| Place of search | Date of completion of the search | Examiner |
|---|---|---|
| The Hague | 7 November 2024 | Cilia, Elisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 24155883

- EP 24174530

**Non-patent literature cited in the description**

- **DOSOVITSKIY, A.** ; **BEYER, L.** ; **KOLESNIKOV, A.** ; **WEISSENBORN, D.** ; **ZHAI, X.** ; **UNTERTHINER, T.** ; **DEHGHANI, M.** ; **MINDERER, M.** ; **HEIGOLD, G.** ; **GELLY, S.** An image is worth 16x16 words: Transformers for image recognition at scale. *9th International Conference on Learning Representations, ICLR 2021, Virtual Event, Austria*, 03 May 2021

- **ZHU, L.** ; **LIAO, B.** ; **ZHANG, Q.** ; **WANG, X.** ; **LIU, W.** ; **WANG, X.** Vision mamba: Efficient visual representation learning with bidirectional state space model. *CoRR*, 2024

- **HOCHREITER, SEPP** ; **SCHMIDHUBER, JÜRGEN**. Long Short-term Memory. *Neural computation*, 1997, vol. 9, 1735-80

- **BECK, M.** ; **PÖPPEL, K.** ; **SPANRING, M.** ; **AUER, A.** ; **PRUDNIKOVA, O.** ; **KOPP, M.** ; **KLAMBAUER, G.** ; **BRANDSTETTER, J.** ; **HOCHREITER, S.** xLSTM: Extended Long Short-Term memory. *ar-Xiv:2405.04517*, 2024

- **ZHU, L.** ; **LIAO, B.** ; **ZHANG, Q.** ; **WANG, X.** ; **LIU, W.** ; **WANG, X.** Vision mamba: Efficient visual representation learning with bidirectional state space model. . *CoRR, abs/2401.09417*, 2024